# EUROPEAN PATENT APPLICATION

(11) **EP 2 189 361 A1**
(43) Date of publication of application: **26.05.2010**
(21) Application number: 08425743.5
(22) Date of filing: 20.11.2008
(51) Int. Cl.: B62J 27/00, B62H 5/18

(54) **Anti-theft system for motor-vehicles, particularly for motorcycles**

(71) Applicant: Magneti Marelli S.p.A., 20011 Corbetta (MI) (IT)
(72) Inventor: Mortara, Piero, 10078 Venaria Reale (Torino) (IT)
(74) Representative: Notaro, Giancarlo

(57) **Abstract**

An anti-theft system for motor vehicles equipped with electrical ignition system, in particular for motorcycles, comprises an anti-theft device (4), which can be mounted, for example, on the brake disk (3) of a wheel (1) of the motorcycle, and an electronic unit (5, 6), designed to detect an activated condition of the anti-theft device (4) and to issue a signal (7) in wireless mode that is received by means (8, 9, 13), which are designed to disable accordingly the electrical starting system of the engine.

## Description

The present invention relates to an anti-theft system for motor vehicles equipped with an electrical system for ignition of the engine. The invention relates particularly, even though not exclusively, to motorcycles.

More in particular, the invention relates to an anti-theft system comprising an anti-theft device that can be secured to a part associated to a wheel of the vehicle, for example to a brake disk. Anti-theft systems of the type referred to above are already known and have been used for some time on motorcycles. In the simplest embodiment, the anti-theft device is constituted by a blocking device with a pin that can be inserted through an opening in the brake disk of a motorcycle wheel, substantially like a safety lock.

There have likewise already been made various proposals to prevent the risk of an authorized user forgetting to take the anti-theft device off the brake disk before using the motorcycle. In some cases (see for example EP-A-0 716 007 or US 7 316 302 B2), the system is prearranged for generating an optical and/or acoustic alarm signal in the case where the engine is started and/or the motorcycle is moved with the anti-theft device applied. Said solution does not in effect prevent the possibility of the vehicle being in any case started and set in motion. There have also been proposed solutions (US 6 230 530 B1) that simply envisage a device designed to remind the user that the anti-theft device is applied, constituted for example by a covering element that is detached from the body of the anti-theft device on which it is mounted and is then applied above the seat for the ignition key of the motorcycle, on the control panel, in order to require the user necessarily to remove the aforesaid covering element if he wants to start the engine. Even though said solution is very simple, it obviously does not offer any effective guarantee against the risk of accidents since the covering element could be removed by anybody when the owner of the motorcycle is not present.

The object of the present invention is to provide an anti-theft system of the type referred to at the start of the present description that on the one hand will be extremely simple and inexpensive and on the other will effectively ensure that the user of the vehicle will not be able to start the engine and use the vehicle unless he has removed the anti-theft device.

A further object of the invention is to provide a system of the type specified above that can be easily adapted for use on a vehicle, and in particular on a motorcycle that originally does not have said system.

With a view to achieving the above purposes, the subject of the invention is an anti-theft system for motor vehicles equipped with an electrical system for ignition of the engine, comprising an anti-theft device that can be secured to a part associated to a wheel of the vehicle, for example to a brake disk, said system being **characterized in that** it moreover comprises an electronic detection and transmission unit, associated to the anti-theft device, for transmitting a signal indicating the activated condition of said anti-theft device, and means designed to receive said signal and accordingly disable the electrical system for ignition of the engine of the vehicle.

In a preferred embodiment, the aforesaid electronic detection and transmission unit and the aforesaid receiver means comprise, respectively, an electronic transmitter and an electronic receiver that are in wireless communication with one another according to any known technique.

In a first embodiment, which is suitable for being applied on a motorcycle that originally does not have said device, the receiver means are associated to means for creating an interruption along the line that connects the control member for starting the engine (typically the device operated by the ignition key) to the circuit for starting the engine.

In a variant, which is suited to the case where the system can be incorporated on the motorcycle right from start of production thereof, the receiver means can be constituted by a receiver module incorporated in the electronic control unit that is located on board the motorcycle, so that it can be the control unit itself that disables the ignition system of the engine in the case where the receiver module receives from the transmitter module the signal indicating the activated condition of the anti-theft device.

Thanks to the aforesaid characteristics, the system according to the invention guarantees in a simple and efficient way that the user cannot start the engine unless he has first removed the anti-theft device.

Further characteristics and advantages of the invention will emerge from the ensuing description, with reference to the annexed drawings, which are provided purely by way of non-limiting example and in which:
- Figure 1 illustrates the front wheel of a motorcycle with an anti-theft device mounted as a safety lock on the brake disk; and
- Figures 2 and 3 are block diagrams that illustrate two embodiments of the invention.

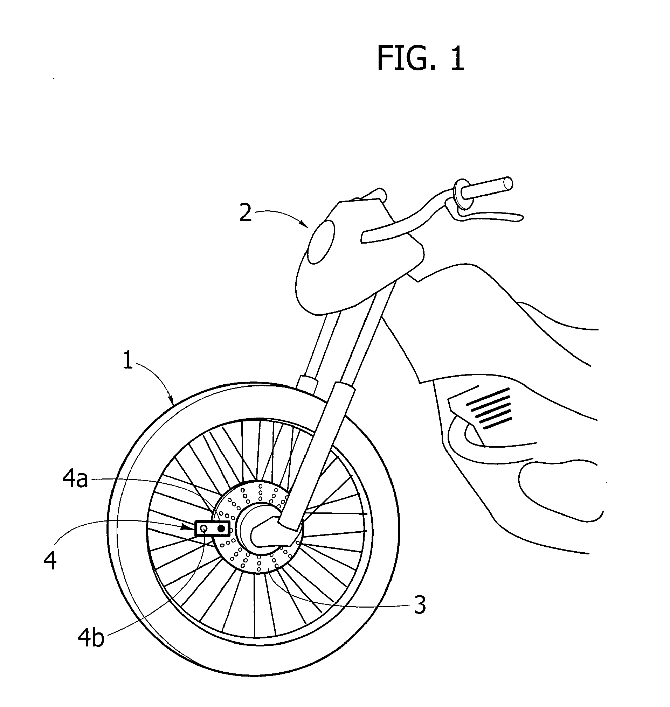

In the annexed drawings, Figure 1 illustrates the front wheel 1 of a motorcycle 2, having a brake disk 3, on which an anti-theft device 4 is mounted like a safety lock. The anti-theft device 4 is not described in detail herein with reference to its conformation and structure in so far as it can be made in any known way. Typically, said device has a body shaped like a U bolt, which can be fitted on the two sides of the disk and secured thereto by means of a pin 4a that is inserted through one of the openings of the disk 3. Movement of the pin between an extracted position and a retracted position is controlled by means of a pawl 4b, in which an anti-theft key can be inserted.

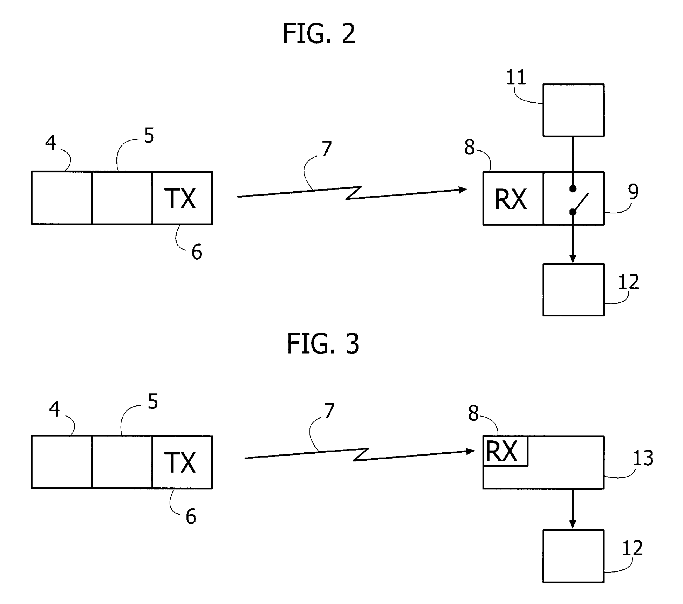

According to what is illustrated schematically in Figure 2, associated to the anti-theft device 4 is a sensor device 5 of any known type, designed to detect the condition where the anti-theft device 4 is installed. For example, the sensor 5 can be constituted by a switch designed to detect when the pin 4a of the anti-theft device is extracted. The device moreover comprises a transmitter module 6 equipped with a supply battery, of a replaceable or rechargeable type, designed to transmit in wireless mode a signal 7 indicating the installed condition of the anti-theft device. The generation of the signal 7 is automatically produced by the transmitter module 6 when said module receives from the sensor module 5 a signal indicating the installed condition of the anti-theft device. The signal 7 is received by a receiver module 8 installed on the motorcycle and associated to a module 9 designed to interrupt the line 10 that connects the starting device 11 (constituted, for example, by the block that can be operated with the ignition key) to the circuit 12 for starting the engine with which the motorcycle is provided.

As already referred to above, the wireless communication 7 can be implemented according to any known modality or technology, but preferably it is based upon the use of the ZigBee protocol. This technology, which is very efficient for production of medium-to-short-range communication systems, affords the advantage of being simpler and more economically advantageous than others, such as for example Bluetooth. ZigBee technology has been designed for use in embedded applications that will require medium-to-low transmission rates, low cost, and low levels of consumption and is hence particularly indicated for practical embodiment of the invention in question. A small battery for each of the two nodes constituting the system can guarantee up to two years of operation without requiring replacement thereof.

The solution illustrated schematically in Figure 2 is suited to being installed on a motorcycle that originally does not have the system according to the invention.

In the case where the system can be provided right from the start, it may, instead, be preferable to adopt the system illustrated schematically in Figure 3, which differs from that of Figure 2 in that in this case the receiver module 8 is incorporated in an electronic control unit 13 on board the motorcycle, which consequently disables the ignition system 12 when it receives from the receiver module 8 a signal indicating the installed condition of the anti-theft device.

From the foregoing description, it emerges clearly that the system according to the invention is characterized by an extreme simplicity of construction and assembly, by the fact that it can be easily adapted also for use on vehicles that originally do not have said system, and by a total guarantee against the risk of unintentional use of the motorcycle with the anti-theft device installed.

Even though the invention has been illustrated with particular reference to motorcycles, it is in general applicable to any type of vehicle with an engine equipped with an electrical ignition system, for example, also on motorbikes and trikes.

Of course, without prejudice to the principle of the invention, the details of construction and the embodiments may vary widely as compared to what is described and illustrated herein purely by way of example, without thereby departing from the scope of the present invention.

It should be noted that in the present description the details regarding the structure of the anti-theft device 4, the sensor module 5, the transmitter module 6, the receiver module 8, and the module 9 have been omitted since they can be made in any known way, since, taken in themselves, they do not fall within the scope of the present invention, and finally also since elimination of the aforesaid details from the drawings renders the latter more readily and more easily understandable.

## Claims

1. An anti-theft system for motor vehicles equipped with an electrical system for ignition of the engine, comprising an anti-theft device (4) that can be secured to a part (3) associated to a wheel (1) of the vehicle, for example, to a brake disk (3),
said anti-theft system being **characterized in that** it moreover comprises an electronic detection and transmission unit (5, 6), associated to the anti-theft device (4), for transmitting a signal indicating the condition where the anti-theft device (4) is activated, and means (8, 9, 13), designed to receive said signal and accordingly disable the electrical system (12) of ignition of the engine of the vehicle.

2. The anti-theft system according to Claim 1, **characterized in that** said electronic detection and transmission unit comprises a sensor module (5), designed to issue a signal indicating the activated condition of the anti-theft device (4), and a transmitter module (6).

3. The anti-theft system according to Claim 1 or Claim 2, **characterized in that** said receiving and disabling means comprise a receiver module (8) and a module (9) designed to interrupt the line (10) for connection of an ignition device (11) to the ignition system (12) located on board the vehicle.

4. The anti-theft system according to Claim 1, **characterized in that** the aforesaid receiving and disabling means comprise a receiver module (8) integrated in an electronic control unit (13) located on board the vehicle and designed to disable the ignition system of the engine (12) when said receiver module (8) receives a signal indicating the activated condition of the anti-theft device (4).

5. The anti-theft system according to any one of the preceding claims, moreover **characterized in that** said detection and transmission unit (5, 6) and said receiving and disabling means (8, 9, 13) are in communication with one another in wireless mode.
